# FASCICULE DE BREVET EUROPEEN

(11) **EP 3 439 865 B1**
(45) Date de publication et mention de la délivrance du brevet: **27.05.2020**
(21) Numéro de dépôt: 17715166.9
(22) Date de dépôt: 05.04.2017
(51) Int. Cl.: B32B 5/02, B32B 7/12, B32B 27/10, B32B 27/12, B32B 29/00, B32B 37/12, B32B 38/00, B42D 25/29, B42D 25/455, B42D 25/47

(54) **PROCEDE DE FABRICATION D'UN DOCUMENT DE SECURITE RECOUVERT D'UN FILM DE PROTECTION ET DOCUMENT AINSI OBTENU**
VERFAHREN ZUR HERSTELLUNG EINES SICHERHEITSDOKUMENTS MIT EINER SCHUTZFOLIENSCHICHT UND AUF DIESE WEISE ERHALTENES DOKUMENT
METHOD FOR PRODUCING A SECURITY DOCUMENT COVERED WITH A PROTECTIVE FILM AND DOCUMENT OBTAINED IN THIS WAY

(30) Priorité: 07.04.2016 FR 1653052
(43) Date de publication de la demande: 13.02.2019
(73) Titulaire: Oberthur Fiduciaire SAS, 75008 Paris (FR)
(72) Inventeur: BORDE, Xavier, 35410 Osse (FR); GILLOT, Julien, 35410 Veneffles (FR); DERMILLY, Ella, 35135 Chantepie (FR)
(74) Mandataire: Regimbeau
(86) Numéro de dépôt international: PCT/EP2017/058065
(87) Numéro de publication internationale: WO 2017/174631

(56) Documents cités:
- WO-A1-2013/182692
- WO-A1-2015/055840

## Description

### DOMAINE DE L'INVENTION

La présente invention se situe dans le domaine de la fabrication des documents de sécurité.

Elle concerne notamment un procédé de fabrication d'un document de sécurité comprenant une feuille de matériau fibreux, dont au moins une des grandes faces opposées est recouverte d'un film de protection.

### ARRIERE PLAN TECHNOLOGIQUE DE L'INVENTION

Les documents de sécurité et plus particulièrement les billets de banque sont destinés à circuler et s'échanger de façon plus ou moins régulière. La fréquence d'échange est liée à plusieurs facteurs. Il s'agit bien évidemment en premier lieu de la valeur faciale du billet, des habitudes culturelles mais aussi des infrastructures locales. En effet, la démocratisation des paiements électroniques a diminué la quantité de billets circulant dans certaines régions. A l'inverse, les pays ou certaines régions de pays peu ou pas équipés de tels moyens de paiements utilisent quant à eux majoritairement des coupures de billets.

En cours de circulation, les billets peuvent également passer par une phase de tri automatisée. C'est par exemple le cas lorsque les billets sont utilisés chez des commerçants ou remis dans des banques commerciales. C'est à cette occasion que le billet est analysé et trié selon plusieurs critères. On peut citer par exemple la lecture de moyens de sécurité de type magnétique ou à fluorescence pour vérifier l'authenticité de la coupure. On peut également citer des mesures d'épaisseurs, l'évaluation du degré de salissures, ou encore la présence de déchirures. Autant de dégradations qu'un billet peut subir lors de sa circulation et qu'il convient d'échanger par des billets neufs lorsque ceux-ci présentent un état général trop dégradé.

Bien que chaque Etat puisse décider de la fréquence d'échange de ces billets, on comprend que certains billets, issus de régions reculées, puissent circuler de nombreuses années avant d'être de nouveau triés. Pour cela, leur résistance mécanique mais aussi leur résistance à la salissure doit être suffisamment bonne pour satisfaire les conditions de circulation les plus extrêmes.

A contrario, certaines coupures peuvent très rapidement être échangées après leur émission suite à de très nombreux passages de main en main ou suite à une utilisation indélicate.

On classe souvent les dénominations d'un pays selon plusieurs niveaux : basses, moyennes et hautes coupures. Les basses et moyennes coupures étant les plus utilisées, c'est celles-ci qui doivent présenter les meilleures performances de durabilité.

Enfin, il faut noter que l'échange des billets usagés est coûteux pour un Etat et celui-ci est naturellement demandeur de solutions pour augmenter la durée de vie de ces billets en circulation afin de limiter le renouvellement de sa masse monétaire.

De nombreuses propositions pour augmenter la résistance des billets en circulation ont été faites.

On peut citer notamment les enseignements du document EP1545902 qui propose d'appliquer à la surface du papier un film fin avant l'impression des différentes sécurités et informations généralement présentes sur un billet.

Ceci permet bien d'augmenter la résistance du support lui-même mais présente l'inconvénient de ne pas protéger les encres qui sont déposées sur un primaire d'accroché lui-même imprimé sur le film précité.

Le document EP1595029 décrit une combinaison de vernis post impression qui associe une sous couche d'une dispersion de polyuréthane et une couche supérieure réticulable sous rayonnement ultraviolet (UV). Cette combinaison de vernis fournit certes une bonne résistance contre la salissure mais ne permet pas d'augmenter la résistance mécanique du support.

Enfin, le document EP2858817 propose de recouvrir d'un film plastique les faces d'un papier imprimé, papier lui-même recouvert d'une enduction de polyuréthane. Cette solution présente l'avantage de garantir une bonne résistance à la salissure et également une protection efficace des encres contenues sous le film et, de surcroît, de garantir aussi une résistance mécanique accrue.

Toutefois, les adhésifs utilisés dans ce dernier cas sont de nature thermoplastique. Il s'agit en effet de copolymères d'éthylène-acétate de vinyle qui ont la propriété de se ramollir lorsqu'ils sont chauffés. Ainsi, même si le film et son support sont solidairement liés, il est possible par simple chauffage par exemple à une température supérieure à 90°C de retirer le film de protection et ainsi perdre tout l'intérêt du film.

Cette délamination du film peut également être observée lors d'une utilisation plus « normale » du billet, notamment dans des environnements humides combinés à des froissements. Cette délamination a lieu principalement aux quatre coins du billet ou dans des parties en relief quand le film épouse difficilement ce relief.

La délamination intempestive ou occasionnée volontairement est très pénalisante pour le billet. Elle peut provoquer éventuellement un doute sur son authenticité et, bien entendu, lui donne un aspect disgracieux. De surcroît, cette "languette" formée aux quatre coins peut engendrer des perturbations lors du tri des billets dans les machines automatisées des banques, augmentant ainsi le nombre de retrait des coupures.

Pour résoudre les problèmes de tenue à la chaleur ou à d'autres conditions, il est possible d'utiliser un adhésif de type thermodurcissable qui, une fois réticulé, ne pourra pas être refondu et remis en forme. Toutefois, les températures de réticulation de ces produits sont généralement plus hautes que les températures atteignables sur des machines de pelliculage. Ou alors le temps d'activation est incompatible avec une cadence d'une machine industrielle, ou encore, le temps de contact entre la colle et la calandre est très faible et insuffisant pour réticuler complètement l'adhésif.

La présente invention a pour but de proposer un nouveau procédé de fabrication de documents de sécurité dont les faces opposées sont recouvertes d'un film de protection, procédé qui permet finalement d'obtenir des documents qui conservent leur parfaite intégrité, même lorsqu'ils sont soumis à un traitement agressif, tel qu'une élévation de température volontaire à des fins frauduleuse, ou immergés par inadvertance par exemple dans un milieu liquide lessiviel et plus généralement dans des conditions d'utilisation extrêmes.

### RESUME DE L'INVENTION

Ainsi, la présente invention se rapporte, selon un premier aspect, à un procédé de fabrication d'un document de sécurité comprenant une feuille de matériau fibreux, dont au moins une des grandes faces opposées est recouverte d'un film de protection, caractérisé par le fait qu'il comporte les étapes suivantes qui consistent à :
a/ recouvrir ladite grande face de ladite feuille d'un premier thermoadhésif ;
b/ recouvrir l'une des faces dudit film de protection d'un second thermoadhésif ;
   le premier et le second thermoadhésif étant différents et choisis dans le groupe constitué par un thermoadhésif de type thermoplastique et un thermoadhésif réticulable sous rayonnement ultraviolet ;
c/ apposition dudit film sur ladite feuille de façon à ce que le premier et le second thermoadhésifs viennent en contact ;
d/ traitement thermique de l'assemblage feuille+film de l'étape c/ jusqu'au ramollissement desdits thermoadhésifs ;
e/ exposition de l'assemblage feuille+film de l'étape c/, à un rayonnement ultraviolet déclenchant la réticulation dudit thermoadhésif réticulable.

Comme on le verra plus loin à la lumière de la description, c'est à la condition de mettre en oeuvre ces différentes étapes, comprenant l'application de deux thermoadhésifs, dont un est réticulable sous rayonnement ultraviolet, que l'on obtient un document de sécurité qui conserve ultérieurement son intégrité.

Selon d'autres caractéristiques non limitatives et avantageuses de ce procédé :
- lesdites étapes c/ et d/ sont mises en oeuvre conjointement ;
- ladite étape c/ est mise en oeuvre avec application d'une pression ;
- ledit traitement thermique est mis en oeuvre à une température comprise entre 80 et 110° C ;
- à l'issue des étapes a/ et b/, on procède au séchage desdits thermoadhésifs à une température comprise entre 50 et 100 °C ;
- ladite étape a/ est mise en oeuvre également sur la seconde grande face de ladite feuille ;
- ladite étape a/ est réalisée en même temps sur les deux grandes faces de ladite feuille ;
- ledit premier thermoadhésif comprend une dispersion de polyuréthane non polymérisable ;
- ledit premier thermoadhésif est choisi dans le groupe comprenant une dispersion de polyuréthane anionique à haut poids moléculaire, une dispersion de polyester polyuréthane aliphatique, une dispersion de polycarbonate uréthane aliphatique et les mélanges d'au moins deux de ces dispersions ;
- ledit second thermoadhésif comprend une dispersion de polyuréthane réticulable sous rayonnement ultraviolet ;
- ledit second thermoadhésif comprend une dispersion de polyuréthane insaturé, réticulable sous rayonnement ultraviolet et incorporant au moins un photo initiateur ;
- le document de sécurité qui comporte au moins une impression de sécurité, et ladite impression est réalisée sur ladite feuille, avant apposition dudit premier thermoadhésif ;
- le document de sécurité qui comporte au moins une impression de sécurité, et ladite impression est réalisée sur ladite feuille, après apposition dudit premier thermoadhésif.

Par ailleurs, l'invention concerne également un document de sécurité obtenu par la mise en oeuvre du procédé selon l'une des caractéristiques ci-dessus.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue simplifiée, en coupe, d'un billet de banque susceptible d'être obtenu conformément au procédé de la présente invention ;
- la figure 2 est une vue schématique illustrant certaines étapes du procédé selon l'invention.

### DESCRIPTION DETAILLEE DE L'INVENTION

Dans l'ensemble de la présente demande, on entend par l'expression "document de sécurité" tous les documents de valeur, dont on veut éviter la reproduction frauduleuse et qui comporte donc un ensemble de signes distinctifs difficilement ou non reproductibles par simple photocopie mais identifiables par le grand public. Il s'agit notamment des passeports, cartes d'identités, chèques, billets de banque, etc.

La présente invention trouve tout particulièrement une application dans le domaine des billets de banque. C'est d'ailleurs en référence à un billet de banque que la description qui suit est donnée. Mais il est bien entendu que la présente description vaut également pour des documents de sécurité autres que les billets de banque.

On entend par ailleurs par le terme "support" les papiers à base de fibres d'origine naturelle, mais également ceux en fibres synthétiques ou constitués d'un mélange de ces deux types de fibres.

Enfin, on entend par le terme "plastification" un procédé de pelliculage à sec (en anglais type "dry"), selon lequel le film est revêtu d'un adhésif sec, capable de se ramollir au contact d'une calandre chauffée pour adhérer par pression sur le papier.

Selon l'état de l'art, il est connu d'utiliser des films de type PET (polyéthylène téréphtalate) ou bien BOPP (polypropylène bi-orienté), d'une épaisseur de l'ordre de 10 à 20 µm, préalablement enduit d'une couche d'EVA (éthylène de vinyle acétate) d'environ 5 à 10 µm d'épaisseur. Ces films sont appliqués par un procédé de plastification recto et verso sur un document de sécurité. Le document ainsi formé présente une épaisseur finale d'environ 125 µm et un grammage d'environ 115 g/m².

La résistance mécanique d'un tel support est fortement augmentée, notamment au test de résistance au pli Schopper tel que décrit par la norme ISO 5626 (dépassant les 50 000 double plis) et la résistance à la salissure est également augmentée pour un résultat au test Fritsch d'environ -8 (Delta (c'est à dire différence) de luminance par rapport à la référence).

Le produit ainsi obtenu a subi des tests de durabilité afin de connaître ses faiblesses.

Deux tests sont critiques quant à la durabilité du document et mettent en évidence les fragilités du produit concerné :
1) Test à l'étuve : il s'agit d'exposer le produit à une température de 120 °C pendant 30 minutes dans une étuve.
2) Test à la lessive : il s'agit d'immerger le produit dans une eau portée à 95°C et contenant une poudre de lessive de type Persil (marque déposée) à une concentration de 0.5 %. Un test analogue est celui de la machine à laver qui donne un résultat sensiblement identique.

### Résultats obtenus

| **Test** | **Résultat obtenu** | **Résultat** |
|---|---|---|
| Etuve (120°C/30 minutes) | Effet de cloquage du film. Le film se décolle du support. La colle reste sur le film. | 0 |
| Test à la lessive (Persil 0.5 %) | Délamination du film sur les bords du billet. | 0 |

| | | |
|---|---|---|
| Légende : "0": non satisfaisant /"1" : satisfaisant. | | |

Le test à l'étuve met en évidence une sensibilité de l'adhésif de type EVA à la chaleur. La formation de cloques montre une perte d'adhésion entre la colle et le papier. Les adhésifs EVA sont de nature thermoplastique et ne sont donc pas stables lorsqu'on dépasse leur température de ramollissement. En l'occurrence, celle-ci varie entre 80 et 100°C selon les formules.

Le test à la lessive (ou machine à laver) montre une sensibilité à l'eau, phénomène accentué par la lessive. Le décollement ou délamination du film a lieu en priorité aux bords du papier, c'est-à-dire sur les contours du billet.

### Procédé selon l'invention

Il a été constaté que certains adhésifs avaient une affinité plus grande avec les supports en coton (ou en coton imprimé), alors que d'autres avaient une affinité avec les supports polymériques. Ainsi, selon la présente invention, il est proposé d'utiliser deux types d'adhésifs, un premier destiné à revêtir le support et l'autre le film plastique de manière à former un couple qui aura la meilleure synergie possible dans leur zone de jonction/contact.

### 1) Thermoadhésif pour papier (primaire)

Comme indiqué plus haut, le premier thermoadhésif est de type thermoplastique.

Avantageusement, on peut opter pour les dispersions aqueuses de polyuréthane avec, préférentiellement, des pourcentages de polymères amorphe compris entre 40 et 50%.

D'autres types de matériau thermoplastique peuvent convenir.

A titre indicatif, il est possible d'utiliser les produits connus sous les appellations commerciales "Dispercoll U42" ou "Dispercoll U 8755" (cristallin).

On peut également choisir des dispersions de polyester uréthane aliphatique (telles que celle connue sous l'appellation commerciale Bayhydrol UH XP 2719) ou bien des dispersions de polycarbonate uréthane aliphatique.

Ces enductions sont par exemple réalisées par un système d'application de type enduction (en anglais "coating"), héliogravure, flexographie ou sérigraphie. Ces enductions peuvent être réalisées avant ou après impression des encres traditionnelles d'imprimerie sur le document.

Préférentiellement, on applique un grammage d'environ 5 à 15 g/m².

Après application, on procède à un séchage à une température de préférence de l'ordre de 50 à 100°C.

### 2) Thermoadhésif réticulable sous UV pour film polymérique

De préférence, on choisira ce thermoadhésif parmi les dispersions de polyuréthane insaturé, par exemple celui connu sous la référence commerciale "Bayhydrol UV XP2720" réticulable sous un rayonnement UV, c'est-à-dire incorporant un système de photo initiateurs par exemple ceux connus sous les appellations Irgacure 500 et Irgacure 819 à un pourcentage de 1 à 5%. Le nom commercial de cet assemblage est "FLL-1-8116".

L'application du thermoadhésif sur le film est par exemple réalisée par un système d'enduction de type héliogravure, flexographie ou sérigraphie.

Préférentiellement, on applique un grammage d'environ 5 à 15 g/m².

Après application, on procède à un séchage à une température de préférence de l'ordre de 50 à 100°C.

### 3) Plastification du papier

Le film est avantageusement appliqué sur au moins une face du papier par un procédé dit de pelliculage "dry". De façon préférentielle, on pourra choisir un procédé recto/verso, ce qui signifie qu'un film est appliqué simultanément sur les deux faces du papier.

Au cours de cette étape, le film est mis en contact avec une calandre par sa face supérieure, tandis que sa face inférieure supportant l'adhésif est en contact avec le papier. Un cylindre de contre pression en caoutchouc permet une répartition uniforme de la pression de lamination.

Généralement, les calandres sont portées à des températures aux alentours de 80°C à 110°C, de telle sorte que le thermoadhésif supporté par le film soit ramolli et puisse coller sur le papier.

La vitesse de plastification est de l'ordre de 20 à 100 mètres par minutes.

Afin de procéder à la réticulation complète, on procède après chauffage thermique à une exposition à un rayonnement UV par exemple à l'aide d'une lampe standard à mercure, ou bien dopé au fer et au gallium, ou bien de système de diodes électroluminescentes à une puissance par exemple de 200W/cm².

Les bénéfices de cette réticulation sous UV et la synergie avec le primaire seront mis en évidence dans le tableau ci-dessous.

Les essais sont réalisés avec un papier vélin de 70 à 90 g/m² préalablement imprimé selon les procédés d'impression connus d'offset et de taille douce.

L'enduction des thermoadhésifs est réalisée à hauteur de 5 à 10 g/m² et préférentiellement de 7 g/m².

L'enduction est par exemple réalisée par un système d'application de type "coating", héliogravure, flexographie ou sérigraphie.

**TABLEAU**

| **Numéro de l'essai** | **Thermoadhésif pour film** | **Colle pour papier (primaire)** | **Réticulation UV après plastification** | **Adhésion après plastification** | **Résu ltats après test en étuve (120°C/30 minutes)** | **Résultats après test de lessive (Persil 0.5%)** |
|---|---|---|---|---|---|---|
| 1 | FLL-1-8116 | Aucun | Non | 0 : la colle reste sur le papier | / | / |
| 2 | FLL-1-8116 | Aucun | Oui | 0 : la colle reste sur le film | / | / |
| 3 | FLL-1-8116 | Dispercoll U42 | Non | / | / | / |
| 4 | FLL-1-8116 | Dispercoll U42 | Oui | 1 | 1 | 1 |
| 5 | FLL-1-8116 | Dispercoll U8755 | Oui | 1 | 1 | 1 |
| 6 | FLL-1-8116 | Bayhydrol UH XP2719 | Oui | 1 | 1 | 1 |
| 7 | FLL-1-8116 | Desmodur XP2802 | Oui | 0 | 0 | 0 |
| 8 | FLL-1-8116 | Bayhydrol UH XP2719+Desmodur XP2802 | Oui | 1 | 1 | 1 |
| 9 | FLL-1-8116 + Dispercoll U42 (30 à 50%) | Aucun | Oui | 0 : la colle reste sur le film | / | / |
| 10 | FLL-1-8116 + Dispercoll U8755 (30 à 50%) | Aucun | Oui | 0 : la colle reste sur le papier | / | / |
| 11 | Bayhydrol UH XP2719 | Aucun | Oui | 0 : la colle reste sur le film | / | / |
| 12 | Dispercoll U8755 | Dispercoll U8755 | Non | 0 : la colle reste sur le papier | / | / |
| 13 | Bayhydrol UV XP2690 | Aucun | Oui | 0 : la colle reste sur le film | / | / |
| 14 | Dispercoll U42 | Aucun | Non | 0 : la colle reste sur film | / | / |
| 15 | Dispercoll U8755 | Aucun | Non | 0 : la colle reste sur papier | / | / |

| | | | | | | |
|---|---|---|---|---|---|---|
| Légende : « 0 » :non satisfaisant / « 1 » : satisfaisant | | | | | | |

### 3) Interprétation des résultats du tableau ci-dessus

Les essais réalisés mettent en évidence que l'utilisation d'un seul thermoadhésif pour enduire le film ne permet pas d'obtenir les résultats satisfaisants (voir résultats des essais 1, 2, 9, 10, 11, 13, 14 et 15). En effet, on constate que cette "colle" reste sur le film ou sur le papier.

De même, si l'on fait usage d'un thermoadhésif présentant une affinité avec le papier (par exemple Dispercoll U42) et d'un thermoadhésif présentant une affinité avec film (par exemple FLL-1-8116), sans réticulation sous rayonnement ultraviolet, on n'obtient pas non plus de résultats satisfaisants (voir essai 3).

En revanche, lorsqu'une réticulation sous rayonnement ultraviolet est réalisée, on obtient des résultats satisfaisants (voir résultats des essais 4 4, 5, 6, et 8).

On constate donc une synergie d'effet entre l'enduction réalisée sur le papier et celle réalisée sur le film, laquelle est scellée de façon définitive grâce à une exposition sous rayonnement ultraviolet.

On pourrait penser que la dispersion pour enduire le papier soit réactivable lors d'une montée en température (c'est à dire que ce thermoadhésif redevienne liquide, à tout le moins fluide).

Or, dans les faits et en utilisant les deux thermoadhésifs selon l'invention, on constate que si l'on utilise parallèlement un second thermoadhésif tel que celui identifié ci-dessus, l'ensemble se comporte comme une colle irréversible (donc non réactivable, ce qui signifie qu'elle conserve sa fonction de colle quoi qu'il arrive, sans revenir à un état qui permettrait la séparation du film).

On comprend aisément que cette propriété est particulièrement intéressante dans le cas de la protection de billets de banque et plus spécifiquement en ce qui concerne l'augmentation de leur durée de vie.

Bien que cela ne soit pas décrit plus précisément, on peut envisager d'enduire le papier avec le thermoadhésif réticulable sous rayonnement ultraviolet et le film avec le thermoadhésif de type thermoplastique.

### 4) Description des figures annexées

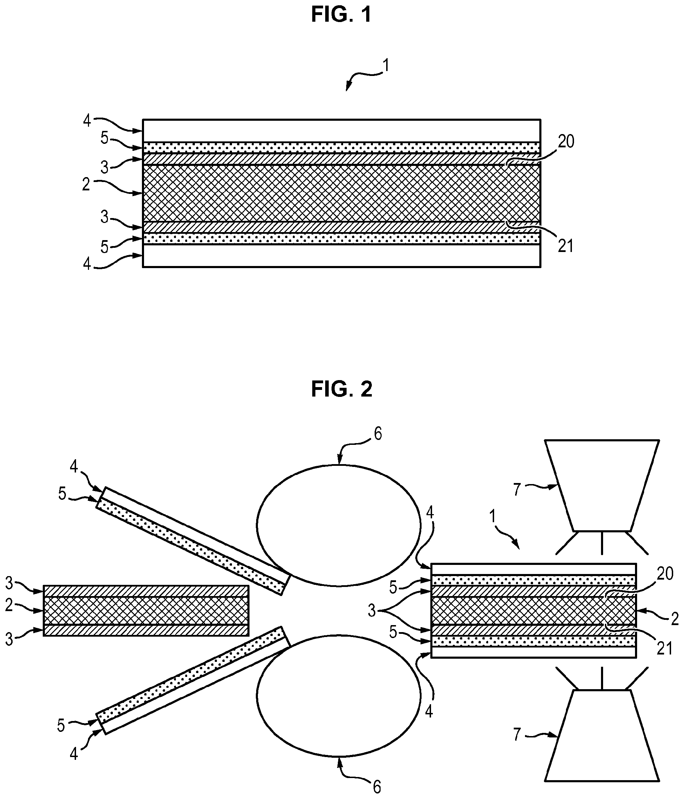

A la figure 1 est représenté schématiquement un billet de banque 1 que l'on peut obtenir conformément au procédé selon la présente invention.

Il est à noter que les épaisseurs des différents produits qui le composent ne reflètent aucunement la réalité, l'essentiel étant, sur cette figure, d'identifier chaque constituant.

Ce billet comporte une feuille de matériau fiduciaire qui forme un support 2. Il s'agit par exemple de papier.

Bien entendu, ce support est susceptible d'intégrer toutes les sécurités utilisées à ce jour.

Chacune de ses deux grandes faces opposées 20 et 21 est revêtue d'un thermoadhésif 3. Ces faces portent préalablement des impressions de sécurité. Toutefois, ces impressions sont susceptibles d'être mises en œuvre ultérieurement.

De plus, un film transparent 4, par exemple en BOPP, recouvre chacune des faces 20 et 21 précitées.

On notera que la face des films 4 qui est en regard des grandes faces 20 et 21 du support 2 est revêtue d'un thermoadhésif 5 réticulable sous rayonnement ultraviolet.

En référence à la figure 2, un premier ensemble constitué d'un support 2 revêtu sur ses deux grandes faces de thermoadhésif 3 est associé à deux autres ensembles chacun formé d'un film 4 enduit de thermoadhésif 5

Ils sont réunis et pressés par deux calandres supérieure et inférieure 6. Ces calandres sont chauffantes, de sorte que les thermoadhésifs 3 et 5 sont ramollis. Ultérieurement, le billet 1 ainsi confectionné passe en regard de lampe à rayonnement ultraviolet 7, de manière à déclencher la réticulation du thermoadhésif 5.

## Revendications

1. Procédé de fabrication d'un document de sécurité (1) comprenant une feuille (2) de matériau fibreux, dont au moins une des grandes faces opposées (20, 21) est recouverte d'un film de protection (4), **caractérisé par le fait qu'**il comporte les étapes suivantes qui consistent à :
a/ recouvrir ladite grande face (20, 21) de ladite feuille (2) d'un premier thermoadhésif (3) ;
b/ recouvrir l'une des faces dudit film de protection (4) d'un second thermoadhésif (5) ;
les deux thermoadhésifs (3, 5) étant différents, l'un étant un thermoadhésif de type thermoplastique et l'autre un thermoadhésif réticulable sous rayonnement ultraviolet ;
c/ apposition dudit film (4) sur ladite feuille (2) de façon à ce que le premier (3) et le second (5) thermoadhésifs viennent en contact ;
d/ traitement thermique de l'assemblage feuille (2)+film (4) de l'étape c/ jusqu'au ramollissement desdits thermoadhésifs (3, 5) ;
e/ exposition de l'assemblage feuille (2)+film (4) de l'étape c/, à un rayonnement ultraviolet déclenchant la réticulation dudit thermoadhésif (5) réticulable.

2. Procédé selon la revendication 1, **caractérisé par le fait que** lesdites étapes c/ et d/ sont mises en oeuvre conjointement.

3. Procédé selon l'une des revendications 1 ou 2, **caractérisé par le fait que** ladite étape c/ est mise en oeuvre avec application d'une pression.

4. Procédé selon l'une des revendications précédentes, **caractérisé par le fait que** ledit traitement thermique est mis en oeuvre à une température comprise entre 80 et 110°C.

5. Procédé selon l'une des revendications précédentes, **caractérisé par le fait qu'**à l'issue des étapes a/ et b/, on procède au séchage desdits thermoadhésifs (3, 5) à une température comprise entre 50 et 100 °C.

6. Procédé selon l'une des revendications précédentes, **caractérisé par le fait que** ladite étape a/ est mise en oeuvre également sur la seconde grande face (21) de ladite feuille (2).

7. Procédé selon la revendication 6, **caractérisé par le fait que** ladite étape a/ est réalisée en même temps sur les deux grandes faces (20, 21) de ladite feuille (2).

8. Procédé selon l'une des revendications précédentes, **caractérisé par le fait que** ledit premier thermoadhésif (3) comprend une dispersion de polyuréthane non polymérisable.

9. Procédé selon la revendication 8, **caractérisé par le fait que** ledit premier thermoadhésif (3) est choisi dans le groupe comprenant une dispersion de polyuréthane anionique à haut poids moléculaire, une dispersion de polyester polyuréthane aliphatique, une dispersion de polycarbonate uréthane aliphatique et les mélanges d'au moins deux de ces dispersions.

10. Procédé selon l'une des revendications précédentes, **caractérisé par le fait que** ledit second thermoadhésif (5) comprend une dispersion de polyuréthane réticulable sous rayonnement ultraviolet.

11. Procédé selon la revendication 10, **caractérisé par le fait que** ledit second thermoadhésif (5) comprend une dispersion de polyuréthane insaturé, réticulable sous rayonnement ultraviolet et incorporant au moins un photo initiateur.

12. Procédé selon l'une des revendications précédentes, de fabrication d'un document de sécurité (1) qui comporte au moins une impression de sécurité, **caractérisé par le fait que** ladite impression est réalisée sur ladite feuille (2), avant apposition dudit premier thermoadhésif (3).

13. Procédé selon l'une des revendications 1 à 12, de fabrication d'un document de sécurité (1) qui comporte au moins une impression de sécurité, **caractérisé par le fait que** ladite impression est réalisée sur ladite feuille (2), après apposition dudit premier thermoadhésif (3).

14. Document de sécurité (1) obtenu par la mise en oeuvre du procédé selon l'une des revendications précédentes.

## Patentansprüche

1. Verfahren zur Herstellung eines Sicherheitsdokuments (1), umfassend einen Bogen (2) aus Fasermaterial, von dem mindestens eine der gegenüberliegenden großen Seiten (20, 21) mit einer Schutzfolie (4) bedeckt ist, **dadurch gekennzeichnet, dass** es die folgenden Schritte aufweist, die darin bestehen:
a/ Bedecken der großen Seite (20, 21) des Bogens (2) mit einem ersten Thermoadhäsiv (3);
b/ Bedecken der einen der Seiten der Schutzfolie (4) mit einem zweiten Thermoadhäsiv (5);
wobei die zwei Thermoadhäsive (3, 5) unterschiedlich sind, wobei das eine ein Thermoadhäsiv vom thermoplastischen Typ und das andere ein unter ultravioletter Strahlung vernetzbares Thermoadhäsiv ist;
c/ Anbringen der Folie (4) auf dem Bogen (2) derart, dass das erste (3) und das zweite (5) Thermoadhäsiv in Kontakt kommen;
d/ thermisches Behandeln der Einheit Bogen (2)+Folie (4) von Schritt c/ bis zur Erweichung der Thermoadhäsive (3, 5);
e/ Aussetzen der Einheit Bogen (2)+Folie (4) von Schritt c/ einer ultravioletten Bestrahlung, die das Vernetzen des vernetzbaren Thermoadhäsivs (5) auslöst.

2. Verfahren nach Anspruch 1, **dadurch gekennzeichnet, dass** die Schritte c/ und d/ gemeinsam durchgeführt werden.

3. Verfahren nach einem der Ansprüche 1 oder 2, **dadurch gekennzeichnet, dass** der Schritt c/ mit Anwendung eines Drucks durchgeführt wird.

4. Verfahren nach einem der vorangehenden Ansprüche, **dadurch gekennzeichnet, dass** die thermische Behandlung bei einer Temperatur durchgeführt wird, die zwischen 80 und 110°C liegt.

5. Verfahren nach einem der vorangehenden Ansprüche, **dadurch gekennzeichnet, dass** nach Abschluss der Schritte a/ und b/ die Thermoadhäsive (3, 5) bei einer Temperatur getrocknet werden, die zwischen 50 und 100°C liegt.

6. Verfahren nach einem der vorangehenden Ansprüche, **dadurch gekennzeichnet, dass** der Schritt a/ ebenfalls auf der zweiten großen Seite (21) des Bogens (2) durchgeführt wird.

7. Verfahren nach Anspruch 6, **dadurch gekennzeichnet, dass** der Schritt a/ gleichzeitig auf den zwei großen Seiten (20, 21) des Bogens (2) durchgeführt wird.

8. Verfahren nach einem der vorangehenden Ansprüche, **dadurch gekennzeichnet, dass** das erste Thermoadhäsiv (3) eine nicht polymerisierbare Polyurethandispersion umfasst.

9. Verfahren nach Anspruch 8, **dadurch gekennzeichnet, dass** das erste Thermoadhäsiv (3) aus der Gruppe ausgewählt ist, umfassend eine anionische Polyurethandispersion mit hohem Molekulargewicht, eine aliphatische Polyesterpolyurethandispersion, eine aliphatische Polycarbonaturethandispersion und die Gemische von mindestens zwei dieser Dispersionen.

10. Verfahren nach einem der vorangehenden Ansprüche, **dadurch gekennzeichnet, dass** das zweite Thermoadhäsiv (5) eine unter ultravioletter Strahlung vernetzbare Polyurethandispersion umfasst.

11. Verfahren nach Anspruch 10, **dadurch gekennzeichnet, dass** das zweite Thermoadhäsiv (5) eine ungesättigte, unter ultravioletter Strahlung vernetzbare Polyurethandispersion umfasst und einschließend mindestens einen Photoinitiator.

12. Verfahren nach einem der vorangehenden Ansprüche zur Herstellung eines Sicherheitsdokuments (1), das mindestens einen Sicherheitsdruck aufweist, **dadurch gekennzeichnet, dass** der Druck auf dem Bogen (2) vor dem Anbringen des ersten Thermoadhäsivs (3) durchgeführt wird.

13. Verfahren nach einem der Ansprüche 1 bis 12 zur Herstellung eines Sicherheitsdokuments (1), das mindestens einen Sicherheitsdruck aufweist, **dadurch gekennzeichnet, dass** der Druck auf dem Bogen (2) nach dem Anbringen des ersten Thermoadhäsivs (3) durchgeführt wird.

14. Sicherheitsdokument (1), erhalten durch die Durchführung des Verfahrens nach einem der vorangehenden Ansprüche.

## Claims

1. A method for producing a security document (1) comprising a sheet (2) of fibrous material, of which at least one of the large opposite sides (20, 21) is covered with a protective film (4), **characterized by** the fact that it comprises the following steps which consist in:
a/ covering said large side (20, 21) of said sheet (2) with a first thermal adhesive (3);
b/ covering one of the sides of said protective film (4) with a second thermal adhesive (5);
the first (3) and the second (5) thermal adhesives being different and selected from the group consisting of a thermoplastic thermal adhesive and a thermal adhesive that can be cured under ultraviolet radiation;
c/ affixing said film (4) to said sheet (2) so that the first (3) and the second (5) thermal adhesives come into contact;
d/ heat treating the sheet (2)+film (4) assembly from step c/ until said thermal adhesives (3, 5) soften;
e/ exposing the sheet (2)+film (4) assembly from step c/ to ultraviolet radiation that triggers the curing of said curable thermal adhesive (5).

2. The method according to claim 1, **characterized by** the fact that said steps c/ and d/ are carried out jointly.

3. The method according to one of claims 1 or 2, **characterized by** the fact that said step c/ is implemented with application of pressure.

4. The method according to one of the preceding claims, **characterized by** the fact that said heat treatment is carried out at a temperature between 80 and 110°C.

5. The method according to one of the preceding claims, **characterized by** the fact that at the end of steps a/ and b/, said thermal adhesives (3, 5) are dried at a temperature between 50 and 100 °C.

6. The method according to one of the preceding claims, **characterized by** the fact that said step a/ is also carried out on the second large side (21) of said sheet (2).

7. The method according to claim 6, **characterized by** the fact that said step a/ is carried out at the same time on the two large sides (20, 21) of said sheet (2).

8. The method according to one of the preceding claims, **characterized by** the fact that said first thermal adhesive (3) comprises a non-polymerizable polyurethane dispersion.

9. The method according to claim 8, **characterized by** the fact that said first thermal adhesive (3) is selected from the group consisting of a high molecular weight anionic polyurethane dispersion, an aliphatic polyester polyurethane dispersion, an aliphatic polycarbonate urethane dispersion and mixtures of at least two of these dispersions.

10. The method according to one of the preceding claims, **characterized by** the fact that said second thermal adhesive (5) comprises a polyurethane dispersion that can be cured under ultraviolet radiation.

11. The method according to claim 10, **characterized by** the fact that said second thermal adhesive (5) comprises an unsaturated polyurethane dispersion that can be cured under ultraviolet radiation and that incorporates at least one photoinitiator.

12. The method according to one of the preceding claims, for producing a security document (1) which comprises at least one security print, **characterized by** the fact that said print is created on said sheet (2), before affixing said first thermal adhesive (3).

13. The method according to one of claims 1 to 12, for producing a security document (1) which comprises at least one security print, **characterized by** the fact that said print is created on said sheet (2), after affixing said first thermal adhesive (3).

14. A security document (1) obtained by implementing the method according to one of the preceding claims.
